# EUROPÄISCHE PATENTSCHRIFT

(11) **EP 2 118 504 B1**
(45) Veröffentlichungstag und Bekanntmachung des Hinweises auf die Patenterteilung: **06.07.2011**
(21) Anmeldenummer: 08701151.6
(22) Anmeldetag: 18.01.2008
(51) Int. Cl.: F16C 29/06, F16C 29/10

(54) **WÄLZLAGER UND VERWENDUNG DES WÄLZLAGERS**
ROLLER BEARING AND USE THEREOF
ROULEMENT ET SON UTILISATION

(30) Priorität: 23.01.2007 DE 102007003367
(43) Veröffentlichungstag der Anmeldung: 18.11.2009
(73) Patentinhaber: Aktiebolaget SKF, 415 50 Göteborg (SE)
(72) Erfinder: EDELMANN, Ludwig, 97717 Sulzthal (DE); GRANSOW, Anita, 97526 Sennfeld (DE); JESCHKA, Erwin, 97711 Maßbach (DE); MAYER, Uwe, 97702 Münnerstadt (DE)
(74) Vertreter: Kohl, Thomas
(86) Internationale Anmeldenummer: PCT/EP2008/000368
(87) Internationale Veröffentlichungsnummer: WO 2008/089918

(56) Entgegenhaltungen:
- EP-A- 0 861 990
- WO-A-00/60247
- DE-A1- 4 438 948
- DE-U1- 20 201 594
- US-A1- 2003 214 173

## Beschreibung

Die Erfindung betrifft ein Wälzlager zur Lagerung einer in einer Bewegungsrichtung bewegbaren Achse oder Welle, das mindestens ein Umlaufsegment umfasst, das einen Wälzkörperumlauf mit einer die zu lagernde Achse oder Welle kontaktierenden Vorlaufbahn und mit einer Rücklaufbahn aufweist, wobei ein Reibelement die zulagende Achse oder Welle in etwa parallel entlang der Verlaufbahn kontaktiert.

Außerdem betrifft die Erfindung eine Verwendung des Wälzlagers. Ein derartiges Wälzlager ist aus der DE 44 38 948 A bekannt.

Derartige Wälzlager kommen beispielsweise als Linearlager bei verschiedenen Anwendungen zum Einsatz. Ein möglicher Anwendungsfall ist die aktive Lagerung oder Halterung einer Kopfstütze in einem Kraftfahrzeug. Bei einem Unfall bewegt sich die aktive Kopfstütze mit dem Kopf des Insassen nach vorne und verhindert so ein Zurückschleudern des Kopfs. Dadurch wird ein bei Unfällen ansonsten häufig im Nackenbereich verursachtes Schleudertrauma vermieden.

Bei einer bekannten Ausführungsform ist die aktive Kopfstütze mittels längsverschieblicher Linearlager an zwei Führungen gelagert. Um zu verhindern, dass sich die aktive Kopfstütze ohne Bedarf, wie z.B. bei einer Vollbremsung, selbständig löst und nach vorne bewegt, ist eine weitere mit einem Reibelement zusammenwirkende Führung vorgesehen. Das Reibelement bewirkt eine zunächst zu überwindende Anfangsreibkraft (= Losbrechkraft), unterhalb der es zu keiner Bewegung der aktiven Kopfstütze kommt. Diese Konstruktion mit drei Führungen ist aufwendig und benötigt viel Platz.

Eine Aufgabe der Erfindung besteht deshalb darin, ein Wälzlager der eingangs bezeichneten Art anzugeben, das auf platzsparende Weise die Einstellung einer Anfangsreibkraft ermöglicht.

Zur Lösung dieser Aufgabe wird ein Wälzlager entsprechend den Merkmalen des Patentanspruchs 1 angegeben. Bei dem erfindungsgemäßen Wälzlager ist in etwa parallel entlang der Vorlaufbahn ein Reibelement angeordnet, das die zu lagernde Achse oder Welle kontaktiert.

Das erfindungsgemäße Wälzlager zeichnet sich dadurch aus, das die Erzeugung der gewünschten Anfangsreibkraft unmittelbar in das Wälzlager integriert ist. Dadurch vereinfacht sich der konstruktive Aufwand bei Anwendungen, bei denen eine solche Reibkraft erwünscht ist. Insbesondere bei dem Anwendungsfall der aktiven Kopfstütze kann verglichen mit der bekannten Ausführungsform die dritte gesonderte Führung komplett eingespart werden. Außerdem ist die erfindungsgemäß vorgesehene Integration des Reibelements direkt in das Wälzlager besonders platzsparend. Das Reibelement ist in dem oft ohnehin vorhandenen Zwischenraum zwischen Vor- und Rücklaufbahn untergebracht, so dass die Außenabmessungen des Wälzlagers durch die zusätzlich vorgesehene Einbettung des Reibelements nicht beeinflusst werden.

Vorteilhafte Ausgestaltungen des erfindungsgemäßen Wälzlagers ergeben sich aus den Merkmalen der von Anspruch 1 abhängigen Ansprüche.

Günstig ist eine Variante, bei der die Vorlaufbahn, die Rücklaufbahn und der Zwischenraum in der Bewegungsrichtung verlaufen. Dadurch ergeben sich zum einen eine besonders gute Führung in Bewegungsrichtung und zum anderen eine besonders effiziente Einstellung der gewünschten Anfangsreibkraft.

Weiterhin kann die Bewegungsrichtung vorzugsweise eine axiale Längsrichtung der zu lagernden Achse oder Welle sein. Dann liegt insbesondere ein Linearlager vor, mittels dessen eine längsverschiebliche Lagerung ermöglicht wird. Grundsätzlich kann die vorteilhafte Integration des Reibelements aber auch bei Wälzlagern verwendet werden, die für eine drehbewegliche Lagerung mittels Wälzkörperumlauf ausgelegt sind.

Außerdem gibt es eine bevorzugte Ausgestaltung, bei der in dem Zwischenraum ein die Vorlaufbahn und die Rücklaufbahn voneinander trennender Steg vorgesehen ist, der eine zu der Achse oder Welle hin offene Stegausnehmung aufweist, in der sich das Reibelement befindet. Auf diese Weise lässt sich das Reibelement besonders platzsparend unterbringen.

Gemäß einer anderen günstigen Variante besteht das Reibelement aus einem elastischen Material, insbesondere aus einem Elastomer. Mit diesen Werkstoffen lässt sich die Anfangsreibkraft je nach Anwendungsfall in weiten Grenzen beliebig einstellen.

Vorzugsweise hat das Reibelement außerdem in der Bewegungsrichtung ungefähr die gleiche Ausdehnung wie die Vorlaufbahn. Dadurch wird der verfügbare Platz weitest gehend zur Erzeugung der Anfangsreibkraft ausgenutzt. Bei einer Linearlager-Anwendung hat das Reibelement im Wesentlichen die gleiche Länge wie ein gerader Abschnitt der Vorlaufbahn. Die gekrümmten Teile der Vorlaufbahn, die in die Umlenkbögen von und zu der Rücklaufbahn münden, bleiben dabei insbesondere unberücksichtigt.

Bei einer weiteren vorteilhaften Ausgestaltung hat das Reibelement einen runden Querschnitt und außerdem eine insbesondere längliche Form. Beispielsweise liegt das Reibelement als Stück eines elastischen Rundmaterials vor, aus dem auch herkömmliche O-Ringe hergestellt sind. Hierfür fallen besonders niedrige Fertigungskosten an. Darüber hinaus ermöglicht der runde Querschnitt eine definierte Kontaktierung der Achse oder Welle. Die erzielbare Reibkraft lässt sich dann besonders genau vorherbestimmen.

Günstig ist weiterhin eine Variante, bei der das Reibelement eine solche Querschnittsabmessung und das Material des Reibelements eine solche Shorehärte aufweist, dass das Reibelement eine vorgebbare beim Verlassen des Ruhezustands gemessene Anfangsreibkraft bewirkt. Die Querschnittsabmessungen und Shorehärten der eingesetzten Reibelemente lassen sich in weiten Grenzen variieren. Sie eignen sich also besonders gut zur Anpassung an die im jeweiligen Anwendungsfall geforderte Anfangsreibkraft. Bei einem Einsatz zur Lagerung aktiver Kopfstützen liegt die zur Vermeidung eines unerwünschten selbständigen Lösens des Wälzlagers geforderte Anfangsreibkraft bei insbesondere etwa 10 N. Dieser Wert sollte außerdem vorzugsweise über einen Temperaturbereich von -40 °C bis +80 °C gewährleistet bleiben. Gemäß einer anderen günstigen Variante sind mehrere insbesondere zusammenhängende Umlaufsegmente vorgesehen, von denen jeweils zwei mittels eines Filmscharniers miteinander verbunden sind und die zu einer Hohlzylinderanordnung zusammensetzbar sind. So können in besonders einfacher Weise Lager für üblicherweise zylindrische Achsen oder Wellen hergestellt und vor allem auch montiert werden.

Bei einer günstigen Ausgestaltung ist das Filmscharnier weiterhin durch einen insbesondere dünnen Materialsteg mit einer Multidreiecklochung gebildet. In axialer Richtung zueinander benachbarte Dreiecklöcher dieser Multidreiecklochung haben vorzugsweise jeweils abwechselnde Orientierungen. Die Dreiecklöcher werden beispielsweise bei einem spritzgusstechnischen Herstellen der zusammenhängenden Umlaufsegmente aus einem Kunststoff entsprechend mit vorgesehen. Ein solches Filmscharnier lässt sich damit einfach fertigen. Zugleich bietet es eine sehr gute mechanische Festigkeit und Stabilität sowohl in Umfangsrichtung als auch in axialer Richtung.

Das erfindungsgemäße Wälzlager kann mit besonderem Vorteil zur Lagerung oder Halterung einer aktiven Kopfstütze eingesetzt werden. Dabei ist die mittels des Wälzlagers gelagerte Achse oder Welle fest mit der Kopfstütze verbunden ist. Das in das Wälzlager integrierte Reibelement ermöglicht einen besonders kompakten Aufbau der Gesamtanordnung aus Führung(en), Halterung(en) bzw. Lagerung(en) und aktiver Kopfstütze.

Weitere Merkmale, Vorteile und Einzelheiten der Erfindung ergeben sich aus der nachfolgenden Beschreibung von Ausführungsbeispielen anhand der Zeichnung. Es zeigt:
- Figur 1: ein Ausführungsbeispiel eines Linearlagers aus Umlaufsegmenten mit Wälzkörperumläufen und integrierten Reibelementen in einer perspektivischen und teils aufgeschnittenen Darstellung,
- Figur 2: ein unverschlossenes und unbestücktes Umlaufsegment des Linear- lagers gemäß Fig. 1 in einer perspektivischen Ansicht von oben,
- Figur 3: ein Umlaufsegment des Linearlagers gemäß Fig. 1 in einer perspek- tivischen Ansicht von unten und
- Figur 4: ein weiteres Ausführungsbeispiel eines Linearlagers aus zusam- menhängenden Umlaufsegmenten in perspektivischer und nur teil- montierter Darstellung.

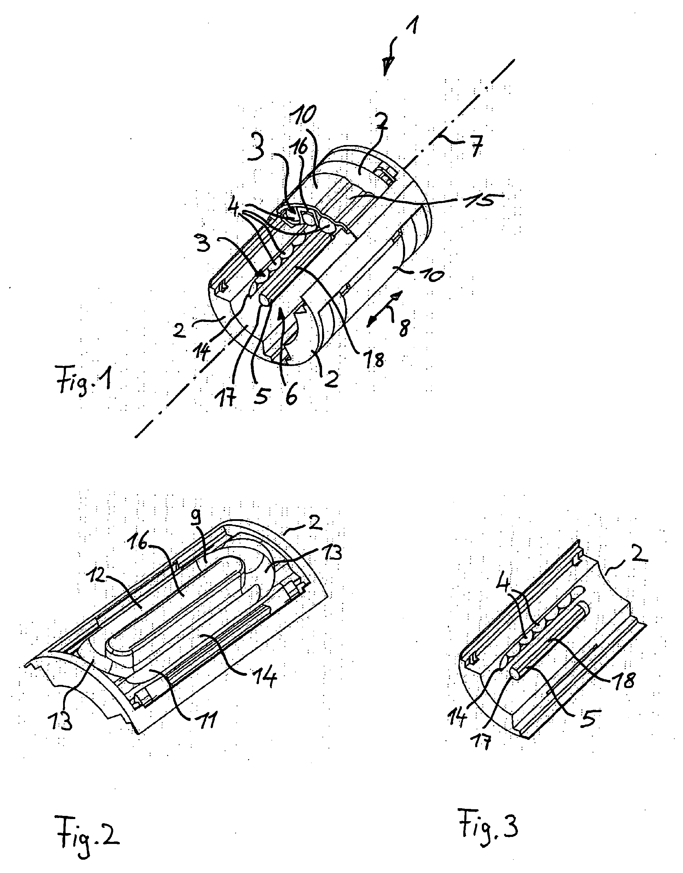

Einander entsprechende Teile sind in den Fig. 1 bis 4 mit denselben Bezugszeichen versehen.

In Fig. 1 ist ein Ausführungsbeispiel eines als gebremstes Linearlager 1 ausgebildeten Wälzlagers dargestellt. Es umfasst mehrere, im Ausführungsbeispiel drei Umlaufsegmente 2, die jeweils einen Wälzkörperumlauf 3 mit Kugeln 4 als Wälzkörpern sowie ein integriertes Reibelement 5 haben. Im zusammenmontierten Zustand bilden die drei Umlaufsegmente 2 eine Hohlzylinderanordnung, in deren hohlem Innenraum 6 eine in Fig. 1 nicht gezeigte Achse oder Welle lagerbar ist. Entlang dieser Achse oder Welle ist das Linearlager 1 axial, d.h. in Richtung einer zentralen Längsachse 7, mittels der Wälzkörperumläufe 3 beidseitig längsverschieblich. Diese beiden möglichen Bewegungsrichtungen des Linearlagers 1 sind in Fig. 1 durch einen mit 8 bezeichneten Doppelpfeil angedeutet.

In Fig. 2 und 3 ist jeweils eines der Umlaufsegmente 2 des Linearlagers 1 in einer Ansicht von oben bzw. von unten dargestellt. Jedes der Umlaufsegmente 2 nimmt einen Wälzkörperumlauf 3 auf. Die Kugeln 4 jedes Wälzkörperumlaufs 3 befinden sich in einem Umlaufbett 9, das nach außen, also oben mit einem Umlaufdeckel 10 verschlossen ist. Wie besonders gut anhand der unverschlossenen Darstellung gemäß Fig. 2 ersichtlich hat das Umlaufbett 9 zwei parallele Laufbahnen, nämlich eine Vorlaufbahn 11 und eine Rücklaufbahn 12, die gerade sind, in Richtung der Längsachse 7 verlaufen und an ihren jeweiligen Enden mittels zweier Umlenkbögen 13 miteinander verbunden sind.

Im Bereich der Vorlaufbahn 11 hat das Umlaufbett 9 an seiner Unterseite eine Lagerungsöffnung 14 zum Innenraum 6, durch die die hier umlaufenden Kugeln 4 die längsverschieblich zu lagernde Achse oder Welle kontaktieren. Genau in diesem Bereich hat der Umlaufdeckel 10 eine nach innen gerichtete Vorwölbung 15, mit der er gegen die darunter angeordneten Kugeln 4 drückt. Letztere werden auf diese Weise durch die Lagerungsöffnung 14 hindurch in Kontakt mit der Achse oder Welle gehalten. Die Rücklaufbahn 12 hat keine vergleichbare Öffnung zur Achse oder Welle.

Zwischen der Vorlaufbahn 11 und der Rücklaufbahn 12 ist ein Zwischenraum vorgesehen. Zur Seite der Kugeln 4 und des Umlaufbetts 9 hin ist dieser Zwischenraum als nach oben aufstehender Steg 16 ausgebildet, der die Vor- und Rücklaufbahn 11 bzw. 12 voneinander trennt. Auf der gegenüberliegenden, also auf der der Achse oder Welle zugewandten Seite ist der Steg 16 ausgehöhlt. Er hat dort eine nach unten, d.h. zur Achse oder Welle hin offene Stegausnehmung 17, die gerade ist und in Richtung der Längsachse 7 verläuft.

In diese Stegausnehmung 17 ist das Reibelement 5 eingelegt. Es hat eine Stabform mit einem runden Querschnitt und erstreckt sich praktisch über die gesamte gerade Länge der Vor- und Rücklaufbahn 11 bzw. 12. Es ist flexibel und besteht aus einem Elastomer. Das zylindrische Reibelement 5 steht im eingelegten Zustand etwas über den unteren Rand der Stegausnehmung 17 hervor und kontaktiert die zu lagernde Achse oder Welle mittels eines schmalen Kontaktbereichs 18 in etwa entsprechend einer breiten Linie.

Das Reibelement 5 verursacht eine gezielt vorgebbare Bremswirkung im Linearlager 1. Insbesondere bewirkt es eine gewünschte Anfangsreibkraft (= Losbrechkraft), die bei stillstehendem Linearlager 1 zunächst aufgebracht werden muss, um das Linearlager 1 in eine Längsbewegung zu versetzen. Bei einem Einsatz des Linearlagers 1 zur Führung oder Halterung einer aktiven Kopfstütze beträgt diese über die Querschnittsabmessungen des Reibelements 5 und / oder die Shorehärte des verwendeten Elastomers einstellbare Anfangsreibkraft etwa 10 N. Die Geometrie- und Materialwahl erfolgt bei dieser Anwendung so, dass dieser Wert der Anfangsreibkraft über einen Temperaturbereich von etwa -40 °C bis +80 °C ungefähr konstant bleibt. Anhand der jeweils verwendeten Querschnittsabmessung des Reibelements 5 kann die Anpresskraft eingestellt werden, mit der das Reibelement 5 gegen die Achse oder Welle gedrückt wird. Auch dieser Anpressdruck geht in die letztendlich vorliegende Anfangsreibkraft ein.

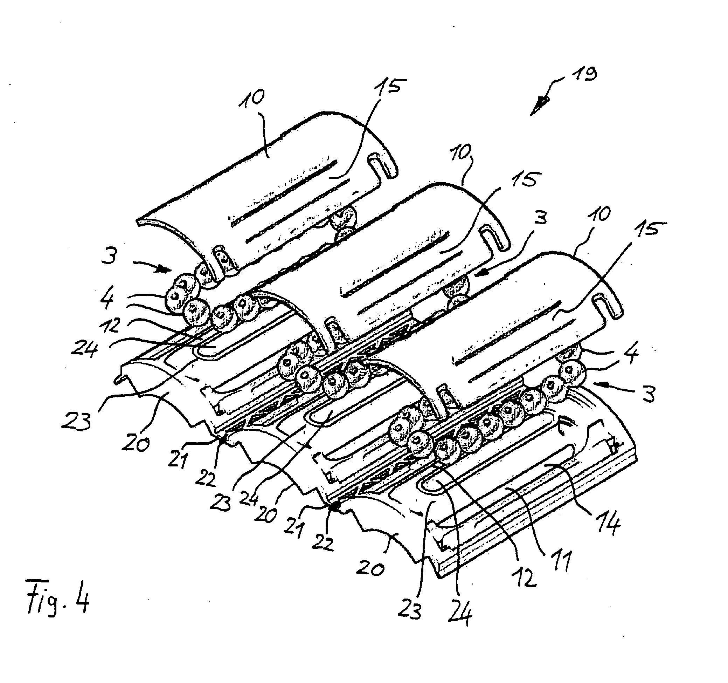

In Fig. 4 ist ein weiteres Ausführungsbeispiel eines ebenfalls gebremsten Linearlagers 19 aus zusammenhängenden Umlaufsegmenten 20 gezeigt. Benachbarte Umlaufsegmente 20 sind jeweils mittels eines Filmscharniers 21 miteinander verbunden, so dass die Umlaufsegmenten 20 wiederum zu einer Hohlzylinderanordnung zusammengeklappt werden können.

Die Filmscharniere 21 sind jeweils durch einen dünnen Materialsteg gebildet, der mit einer Multidreiecklochung 22 versehen ist. Die in axialer Richtung nacheinander angeordneten Dreiecklöcher dieser Multidreiecklochung 22 haben jeweils die Gestalt eines gleichschenkligen Dreiecks. Benachbarte Dreiecklöcher haben unterschiedliche Orientierungen. Sie sind jeweils um 180° gegeneinander gedreht, so dass sich die Orientierungen der Dreiecklöcher mit einer Periode von zwei wiederholen.

Im Unterschied zum Linearlager 1 gemäß Fig. 1 ist beim Linearlager 19 gemäß Fig. 4 ein im Zwischenraum zwischen der Vorlaufbahn 11 und der Rücklaufbahn 12 vorgesehener trennender Steg 23 auch nach oben offen. Eine zur Aufnahme eines in Fig. 4 nicht näher gezeigten Reibelements vorgesehene Stegausnehmung 24 ist also durchgehend ausgebildet. Sie weist zu beiden Seiten hin Öffnungen auf. Dies erleichtert die Montage. Das Reibelement kann auch noch von oben eingelegt werden, nachdem die Umlaufsegmente 20 bereits um die zu lagernde Achse oder Welle herum zusammengeklappt worden sind.

## Patentansprüche

1. Wälzlager zur Lagerung einer in einer Bewegungsrichtung (8) bewegbaren Achse oder Welle umfassend mindestens
- ein Umlaufsegment (2; 20), das einen Wälzkörperumlauf (3) mit einer die zu lagernde Achse oder Welle kontaktierenden Vorlaufbahn (11) aufweist, und
- ein Reibelement (5), das die zu lagernde Achse oder Welle in etwa parallel entlang der Vorlaufbahn (11) kontaktiert,
wobei das Umlaufsegment (2; 20) eine Rücklaufbahn (12) aufweist und zwischen der Vorlaufbahn (11) und der Rücklaufbahn (12) ein Zwischenraum (16, 23) vorhanden ist, in dem das Reibelement (5) angeordnet ist.

2. Wälzlager nach Anspruch 1, wobei die Vorlaufbahn (11), die Rücklaufbahn (12) und/oder der Zwischenraum (16, 23) in der Bewegungsrichtung (8) verlaufen.

3. Wälzlager nach einem der Ansprüche 1 oder 2, wobei die Bewegungsrichtung (8) eine axiale Längsrichtung (7) der zu lagernden Achse oder Welle ist.

4. Wälzlager nach einem der Ansprüche 1 bis 3, wobei in dem Zwischenraum ein die Vorlaufbahn (11) und die Rücklaufbahn (12) voneinander trennender Steg (16; 23) vorgesehen ist, der eine zu der Achse oder Welle hin offene Stegausnehmung (17; 24) aufweist, in der sich das Reibelement (5) befindet.

5. Wälzlager nach einem der Ansprüche 1 bis 4, wobei das Reibelement (5) aus einem elastischen Material, insbesondere aus einem Elastomer, besteht.

6. Wälzlager nach einem der Ansprüche 1 bis 5, wobei das Reibelement (5) in der Bewegungsrichtung (8) ungefähr die gleiche Ausdehnung hat wie die Vorlaufbahn (11).

7. Wälzlager nach einem der Ansprüche 1 bis 6, wobei das Reibelement (5) einen runden Querschnitt hat.

8. Wälzlager nach einem der Ansprüche 1 bis 7, wobei das Reibelement (5) eine solche Querschnittsabmessung und das Material des Reibelements (5) eine solche Shorehärte aufweist, dass das Reibelement (5) eine vorgebbare beim Verlassen des Ruhezustands gemessene Anfangsreibkraft, insbesondere von etwa 10N, bewirkt.

9. Wälzlager nach einem der Ansprüche 1 bis 8, wobei mehrere zusammenhängende Umlaufsegmente (2; 20) vorgesehen sind, von denen jeweils zwei mittels eines Filmscharniers (21) miteinander verbunden sind und die zu einer Hohlzylinderanordnung zusammensetzbar sind.

10. Wälzlager nach Anspruch 9, wobei das Filmscharnier (21) durch einen Materialsteg mit einer Multidreiecklochung (22) gebildet ist.

11. Verwendung des Wälzlagers nach einem der vorhergehenden Ansprüche zur Lagerung einer aktiven Kopfstütze, wobei die mittels des Wälzlagers (1; 19) gelagerte Achse oder Welle fest mit der Kopfstütze verbunden ist.

## Claims

1. Anti-friction bearing for mounting a shaft or axle which can be moved in a movement direction (8) comprising at least
- one circulating segment (2; 20) which has a rolling-body circuit (3) with a feed raceway (11) which makes contact with the shaft or axle to be mounted, and
- one friction element (5) which makes contact with the shaft or axle to be mounted approximately parallel along the feed raceway (11),
the circulating segment (2; 20) having a return raceway (12) and there being an intermediate space (16, 23) between the feed raceway (11) and the return raceway (12), in which intermediate space (16, 23) the friction element (5) is arranged.

2. Anti-friction bearing according to Claim 1, the feed raceway (11), the return raceway (12) and/or the intermediate space (16, 23) extending in the movement direction (8).

3. Anti-friction bearing according to either of Claims 1 and 2, the movement direction (8) being an axial longitudinal direction (7) of the shaft or axle to be mounted.

4. Anti-friction bearing according to one of Claims 1 to 3, a web (16; 23) being provided in the intermediate space, which web (16; 23) divides the feed raceway (11) and the return raceway (12) from one another and has a web recess (17; 24) which is open towards the axle or shaft and in which the friction element (5) is situated.

5. Anti-friction bearing according to one of Claims 1 to 4, the friction element (5) being composed of an elastic material, in particular of an elastomer.

6. Anti-friction bearing according to one of Claims 1 to 5, the friction element (5) having approximately the same extent in the movement direction (8) as the feed raceway (11).

7. Anti-friction bearing according to one of Claims 1 to 6, the friction element (5) having a round cross section.

8. Anti-friction bearing according to one of Claims 1 to 7, the friction element (5) having a cross-sectional dimension of such a type and the material of the friction element (5) having a Shore hardness of such a type that the friction element (5) brings about a predefinable initial frictional force which is measured when leaving the rest state, in particular of approximately 10 N.

9. Anti-friction bearing according to one of Claims 1 to 8, a plurality of contiguous circulating segments (2; 20) being provided, of which in each case two are connected to one another by means of an integral hinge (21) and which can be assembled to form a hollow-cylinder arrangement.

10. Anti-friction bearing according to Claim 9, the integral hinge (21) being formed by a material web with a multiple triangular perforation (22).

11. Use of the anti-friction bearing according to one of the preceding claims for mounting an active headrest, the shaft or axle which is mounted by means of the anti-friction bearing (1; 19) being connected fixedly to the headrest.

## Revendications

1. Roulement pour supporter un axe ou un arbre mobile dans une direction de déplacement (8), comprenant au moins
- un segment de circulation (2; 20), qui présente une couronne de corps de roulement (3) avec une piste d'avance (11) en contact avec l'axe ou l'arbre à supporter, et
- un élément de friction (5), qui est en contact avec l'axe ou l'arbre à supporter environ parallèlement à la piste d'avance (11),
dans lequel le segment de circulation (2; 20) présente une piste de recul (12) et il se trouve, entre la piste d'avance (11) et la piste de recul (12), un espace intermédiaire (16, 23), dans lequel l'élément de friction (5) est disposé.

2. Roulement selon la revendication 1, dans lequel la piste d'avance (11), la piste de recul (12) et/ou l'espace intermédiaire (16, 23) s'étendent dans la direction de déplacement (8).

3. Roulement selon l'une quelconque des revendications 1 ou 2, dans lequel la direction de déplacement (8) est une direction longitudinale (7) de l'axe ou de l'arbre à supporter.

4. Roulement selon l'une quelconque des revendications 1 à 3, dans lequel il est prévu dans l'espace intermédiaire une nervure (16; 23) séparant l'une de l'autre la piste d'avance (11) et la piste de recul (12), et qui présente un évidement de nervure (17; 24) ouvert vers l'axe ou l'arbre à supporter, dans lequel se trouve l'élément de friction (5).

5. Roulement selon l'une quelconque des revendications 1 à 4, dans lequel l'élément de friction (5) se compose d'un matériau élastique, en particulier d'un élastomère.

6. Roulement selon l'une quelconque des revendications 1 à 5, dans lequel l'élément de friction (5) présente, dans la direction de déplacement (8), environ la même dimension que la piste d'avance (11).

7. Roulement selon l'une quelconque des revendications 1 à 6, dans lequel l'élément de friction (5) présente une section transversale ronde.

8. Roulement selon l'une quelconque des revendications 1 à 7, dans lequel l'élément de friction (5) présente une telle dimension de section transversale et la matière de l'élément de friction (5) présente une telle dureté Shore, que l'élément de friction (5) provoque une force de friction initiale mesurée prédéterminable, en particulier d'environ 10 N, au moment de quitter l'état de repos.

9. Roulement selon l'une quelconque des revendications 1 à 8, dans lequel il est prévu plusieurs segments de circulation continus (2; 20), dont deux sont chaque fois reliés l'un à l'autre au moyen d'une charnière pelliculaire (21) et qui peuvent être rassemblés en un agencement de cylindre creux.

10. Roulement selon la revendication 9, dans lequel la charnière pelliculaire (21) est formée par une nervure de matériau avec une perforation triangulaire multiple (22).

11. Utilisation du roulement selon l'une quelconque des revendications précédentes pour le support d'un appuie-tête actif, dans laquelle l'axe ou l'arbre supporté au moyen du roulement (1; 19) est solidaire de l'appuie-tête.
